# EUROPEAN PATENT SPECIFICATION

(11) **EP 1 277 027 B1**
(45) Date of publication and mention of the grant of the patent: **22.07.2009**
(21) Application number: 01927321.8
(22) Date of filing: 25.04.2001
(51) Int. Cl.: G01B 5/255, G01B 11/00, G01B 11/275

(54) **MEASUREMENT OF WHEEL AND AXLE ALIGNMENT OF MOTOR VEHICLES**
SPUR- UND ACHSVERMESSUNG AN KRAFTFAHRZEUGEN
MESURE DE L'ALIGNEMENT DES ROUES ET DES ESSIEUX DE VEHICULES A MOTEUR

(30) Priority: 25.04.2000 US 199366 P; 28.06.2000 US 214390 P
(43) Date of publication of application: 22.01.2003
(73) Proprietor: Snap-on Incorporated, Pleasant Prairie, Wisconsin 53158-1603 (US)
(72) Inventor: JACKSON, David, A., Point Roberts, WA 98281 (US); GLICKMAN, Steven, L., Los Gatos, CA 95032 (US); SHROFF, Hoshang, Cupertino, CA 95014 (US)
(74) Representative: Nöth, Heinz
(86) International application number: PCT/US2001/013143
(87) International publication number: WO 2001/081860

(56) References cited:
- EP-A- 0 757 231
- US-A- 4 311 386
- US-A- 5 519 488
- US-A- 5 535 522
- US-A- 5 586 062
- US-A- 5 675 515
- US-A- 5 748 301

## Description

### FIELD OF THE INVENTION

The present invention relates generally to motor vehicle alignment and, more specifically, to determining alignment of wheels relative to one another using a position determination system.

### BACKGROUND OF THE INVENTION

Motor vehicle alignment systems are important for ensuring that the alignments of wheels on a vehicle are within the specifications provided by motor vehicle manufacturers. If the wheels are out of alignment, there may be excessive or uneven wear. In addition, the performance of the vehicle, particularly handling and stability, may be adversely affected if the wheels are not properly aligned. As used herein, the term "wheel" or "vehicle wheel refers to the tire and wheel assembly found on a motor vehicle. Such an assembly generally includes a conventional tire that is mounted on a metal wheel or "rim."

The wheels of a motor vehicle may be aligned in a number of ways. For example, an operator or an alignment technician can use a vision imaging system such as a computer-aided, three-dimensional (3D) machine vision that employs optical sensing devices, such as cameras, to determine the positions of various objects. Although such machine vision systems are typically used for alignment purposes, these systems can also be used to obtain other positional and angular orientation information about a motor vehicle. Examples of such apparatus and methods are disclosed in U.S. Patent No. 5,724,743, entitled "Method and Apparatus for Determining the Alignment of Motor Vehicle Wheel, issued to Jackson, et al. on March 10, 1998 and in U.S. Patent No. 5,535,522, entitled "Method and Apparatus for Determining the Alignment of Motor Vehicle Wheels," issued to Jackson, et al. on July 16, 1996. The apparatus disclosed in these patents is sometimes called a "3D aligner" or an "aligner," hereinafter referred to as a vision imaging system As used herein, the term "position determination system" refers to an alignment system, such as the vision imaging system, in addition to other components used in conjunction with the alignment system to obtain positional and angular orientation information about a motor vehicle.

The above-described position determination system provides information, such as the centers of rotation of the vehicle's wheels, which aids in the wheel alignment of a vehicle. However, other information such as wheel parallelism, can also aid a technician in aligning the wheels of the vehicle. There is, therefore, a need for an improved method for using a position determination system capable of obtaining other positional information about a vehicle, such as wheel parallelism.

### SUMMARY OF THE INVENTION

This and other needs are met by the present invention, which includes the features of claim 1 or claim 3. One aspect includes indicating wheel positions on the vehicle with targets; imaging the targets to obtain locations of the wheel positions; and calculating a relationship between the front and rear wheels. The calculation of the relationship between the front and rear wheels can include calculating a front wheel track extending between the two front wheels, calculating a rear wheel track extending between the two rear wheels, and comparing an angle between the calculated front wheel track and the calculated rear track to a specified range for the angle. Furthermore, the calculated front and rear wheel tracks can be compared to specified ranges for the front and rear wheel tracks as an aid to a technician in aligning the wheels.

In another aspect, the calculation of the relationship between the front and rear wheels can include calculating a right wheel base with right wheel base being defined as the distance of a line passing adjacent to one of the right wheels and also perpendicularly from the wheel track passing through the wheel to the wheel track passing through the other of the right wheels. Furthermore, the calculation can include calculating a left wheel base with the left wheel base being defined as the distance of a line passing adjacent one of the left wheels and also perpendicularly from the wheel track passing through the wheel to the wheel track passing through the other of the left wheels. Alternatively, the right wheel base can be defined as between the two right wheels and the left wheel base can be defined as between the two left wheels. The calculated right and left wheel bases can be then compared to specified ranges for the right and left wheel bases as an aid to a technician in aligning the wheels.

In a further aspect, the calculation of the relationship between the front and rear wheels can include calculating a front center point of the front wheel track; calculating a rear center point of the rear wheel track; defining a line originating from the center point of one of the front and rear wheel tracks and perpendicular thereto and intersecting the other of the front and rear wheel tracks; and calculating an offset distance from the intersection of the line with the other of the front and rear wheel tracks to the center point of the other of the front and wheel tracks. The calculated offset distance can then be compared to a specified range for offset distance as an aid to a technician in aligning the wheels.

In yet another aspect, the calculation of the relationship between the front and rear wheels can include calculating a first diagonal between the right, front wheel and the left, rear wheel; and calculating a second diagonal between left, front wheel and the right, rear wheel. After that, a difference between the first diagonal and the second diagonal can be calculated, and the calculated difference between the first diagonal and the second diagonal can be compared to a specified range for difference between the first diagonal and the second diagonal. Also, the calculated first diagonal can be compared to a specified range for the first diagonal, and the calculated second diagonal can be compared to a specified range for the second diagonal as an aid to a technician in aligning the wheels.

Additionally, a first skew angle can be calculated between the first diagonal and one of the wheel tracks; and a second skew angle can be calculated between the second diagonal and the one of the wheel tracks. After that, a difference between the first skew angle and the second skew angle can be calculated, and the calculated difference between the first skew angle and the second skew angle can be compared to a specified range for difference between the first skew angle and the second skew angle. Additionally, the calculated first skew angle can be compared to a specified range for the first skew angle, and the calculated second skew angle can be compared to a specified range for the second skew angle as an aid to a technician in aligning the wheels.

### BRIEF DESCRIPTION OF THE DRAWINGS

Reference is made to the attached drawings, wherein elements having the same reference numeral designations represent like elements throughout, and wherein:
Figure 1 is a perspective view of a position determination system and a vision imaging system; and
Figure 2 is a schematic view of the points obtained by the position determination system that are used to obtain a measure of parallelism of the wheel bases.

### DETAILED DESCRIPTION OF THE PREFERRED EMBODIMENTS

A position determination system is capable of obtaining positional information about a vehicle, such as the parallelism of the wheels. Also, the offset and skew of the wheel base can be obtained. This is achieved, in part, by the position determination system determining the spatial relationship of one or more positions by using one or more cameras to image targets associated with each of the positions to be measured. The position determination system operates by imaging a target and comparing the imaged target to a base image of the target. Because the view path of the camera is known, it is possible to determine the angles at which the target is oriented to the view path and the exact location of the target in three-dimensional space. The location of each position to be measured is then inferred from the location of the target associated with the position to be measured.

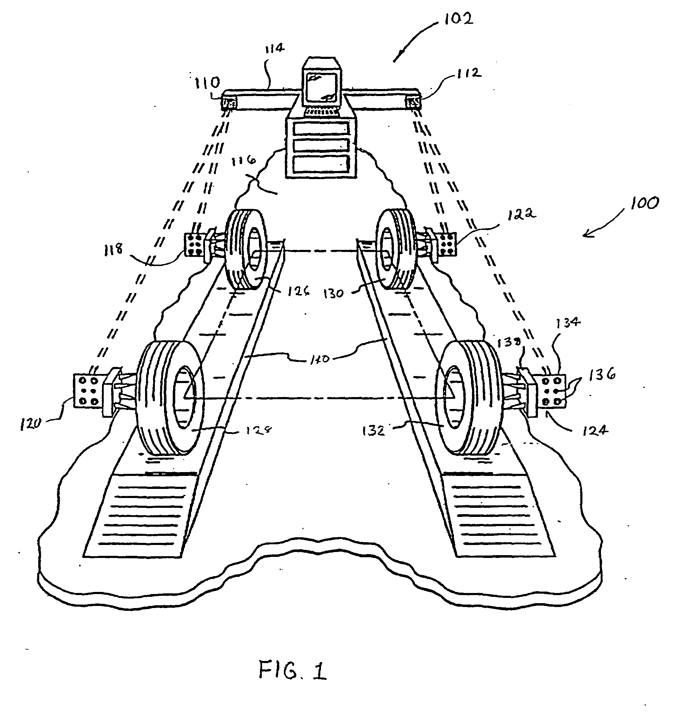

An example of a position determination system is illustrated in Fig. 1. The position determination system 100 includes a vision imaging system 102 having a pair of fixed, spaced-apart cameras 110, 112 mounted on a beam 114. The beam 114 has a length sufficient to position the cameras 110, 112 respectively outboard of the sides of the vehicle to be imaged by the position determination system 100. Also, the beam 114 positions the cameras 110, 112 high enough above the shop floor 116 to ensure that the two targets 118, 120 on the left side of the vehicle are both within the field of view of the left side camera 110, and two targets 122,124 on the right side of the vehicle are both within the field of view of the right side camera 112.

Targets 118, 120, 122, 124 are mounted on each of the wheels 126, 128, 130, 132 of the motor vehicle, with each target 118, 120, 120, 124 including a target body 134, target elements 136, and an attachment apparatus 138. The attachment apparatus 138 attaches the target 118, 120, 120, 124 to wheel 126, 128, 130, 132. An example of an attachment apparatus is described in U.S. Patent No. 5,024,001, entitled "Wheel Alignment Rim Clamp Claw" issued to Borner et al. on June 18, 1991, incorporated herein by reference. The target elements 136 are positioned on the target body 134. Examples of target bodies 134 and target elements 112 acceptable for use in the invention are described in U.S. Patent No. 5,724,743.

In operation, once the position determination system 100 has been calibrated using a calibration target (not shown), as described in the incorporated references, a vehicle can be driven onto the rack 133, and, if desired, the vehicle lifted to an appropriate repair elevation. The targets 118, 120, 122, 124, once attached to the wheel rims, are then oriented so that the target elements 136 on the target body 134 face the respective camera 110, 112. The vehicle and model year can then entered into the vision imaging system 102 along with other identifying parameters, such as vehicle VIN number, license number, owner name, etc.

The location of the targets 118, 120, 122, 124 relative to the rim of the wheels 126, 128, 130, 132 to which the targets are attached are typically known to an accuracy of about 0.01" and about 0.01°. Once the targets 118, 120, 122, 124 have been imaged in one position, the wheels 126, 128, 130, 132 are rolled to another position and a new image can be taken. Using the imaged location of the targets 118, 120, 122, 124 in the two positions, the actual position and orientation of the wheels 126, 128, 130, 132 and wheel axis can be calculated by the vision imaging system 102. Although the distance between the two position varies, the distance is often approximately 8 inches.

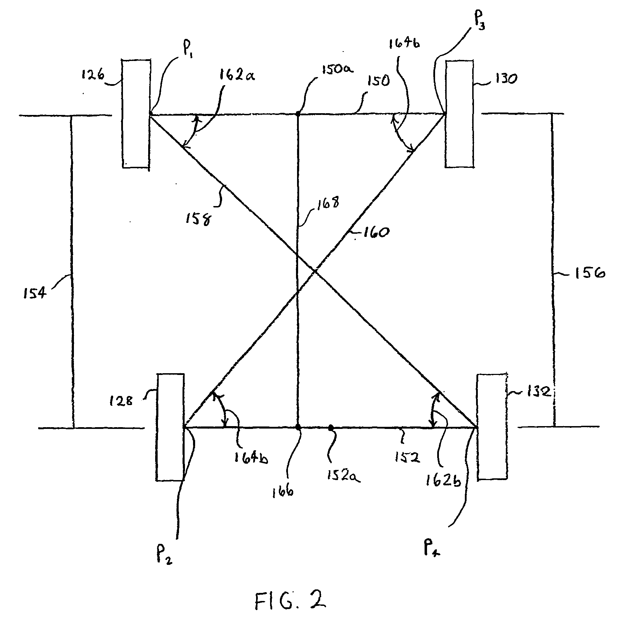

Fig. 2 schematically illustrates information obtained about the wheels 126, 128, 130, 132, wheel track 150, 152, and wheel base 154, 156. As calculated by the position determination system 100, the front wheel track 150 extends between the two wheel positions P_{1,} P₃ used to define the locations of the two front wheels 126, 130 and has a center point 150a. Also, the rear wheel track 152 extends between the two wheel positions P₂, P₄ used to define the locations of the two rear wheels 128, 132 and has a center point 152a. The locations of the wheel positions P₁, P₂, P₃, P₄ are obtained from the position determination system 100 imaging the targets 118, 120, 122, 124 disposed on the wheels 126, 128, 130, 132. The right wheel base 154 is calculated as the distance between the two wheel positions P₃, P₄ used to define the locations of the two right wheels 126, 128. The left wheel base 156 is calculated as the distance between the two wheel positions P₁, P₂ used to define the positions of the two left wheels 130, 132. It should be noted that the wheel positions P₁, P₂, P₃, P₄ to define the positions of the wheels 126, 128, 130, 132 can be any common location along the axis of rotation of the wheels 126, 128, 130, 132. Also, the wheel base 154, 156 can be the perpendicular distance between the front wheels 126, 130 and the rear wheels 128, 132, as illustrated, or the wheel base 154, 156 can be the straight line distance between the wheel positions P₁, P₃ used to define the locations of the front wheels 126, 130 and the wheel positions P₂, P₄ used to define the positions of the rear wheels 128, 132.

Once calculated, the wheel track 150, 152 and wheel base 154, 156 can be compared, for example manually or by the position determination system, to a desired range for wheel track and wheel base for the particular vehicle being inspected. This comparison of the calculated wheel track 150, 152 and wheel base 154, 156 to a desired range can then be used by the technician as an aid in the alignment of the vehicle.

Another aid to the technician is to have the position determination system 100 compare the wheel tracks 150, 152 to each other with regard to parallelism and display the angular difference. The wheel tracks 150, 152 are perfectly parallel if the imaginary lines defined by the wheel tracks 150, 152 are 0° apart. The position determination system 100 can also display a desired range of the angle between the wheel tracks 150, 152, for example 0.00 to 0.50°, and indicate to the technician with the calculated angle is within the desired range.

The information obtained about the wheels 126, 128, 130, 132 can also include a measure of skew. When the plane defined by the wheels 126, 128, 130, 132 is a trapezoid or parallelogram instead of a square, skew is a measure of the difference between the trapezoid or parallelogram with the square. For example, diagonal lines 158, 160 can be respectively drawn between the left, front wheel 126 and the right, rear wheel 132 and between the right, front wheel 130 and the left, rear wheel 128. One measure of skew is the difference between the length of these diagonal lines 158, 160. If, for example, diagonal line 158 is longer than diagonal line 160, the rear wheels 128, 130 are skewed to the right. Conversely, if diagonal line 158 is shorter than diagonal line 160, the rear wheels 128, 130 are skewed to the left. The position determination system 100 can display the length of the diagonal lines 158, 160 and can also compare the diagonal lines 158 to each other. Additionally, the position determination system can compare the length of the diagonal lines to a desired range of lengths for the particular vehicle being measured.

Another measure of skew is to compare the skew angles 162a, 162b between the wheel tracks 150, 152 and the diagonal line 158 from the left, front wheel 126 to the right, rear wheel 132 and the skew angles 164a, 164b between the wheel tracks 150, 152 and the diagonal line 160 from the right, front wheel 130 to the left, rear wheel 128. If, for example, skew angles 162a, 162b are smaller than skew angles 164a, 164b, this indicates that the rear wheels 128, 130 are skewed to the right. Conversely, if skew angles 162a, 162b are larger than skew angles 164a, 164b, the rear wheels 128, 130 are skewed to the left. The position determination system 100 can display the skew angles 162a, 162b, 164a, 164b and can also compare skew the angles 162a, 162b, 164a, 164b to one another. Additionally, the position determination system can compare the skew angles 162a, 162b, 164a, 164b to a desired range of skew angles for the particular vehicle being measured.

A measure similar to skew is offset, which is defined as the distance from the center point 152a, 150a of the wheel track 152, 150 to an intersection point 166 of a line 168 with the wheel track 152, 150. The line 168 originates from the center point 150a, 152a of the other wheel track 150, 152 and is perpendicular to the other wheel track 150, 152. Two offset values can be obtained depending upon from which wheel track 150, 152 the line 168 originates perpendicularly. Also, depending upon the orientation of the wheel tracks 150, 152, the two offset values can be different from each other. If, however, the wheel tracks 150, 152 are parallel, the two offset values will be identical. In this manner, a comparison of the two offset values with each other can be used to determine whether the wheel tracks 150, 152 are parallel. The position determination system 100 can display one or both of the offset values and can compare the these offsets to each other. Additionally, the position determination system can compare one or both of the offsets to a desired range of offsets for the particular vehicle being measured.

## Claims

1. A method of determining alignments between the wheels (126-132) of a vehicle using a position determination system (100) comprising the steps of:
indicating wheel positions on the vehicle with targets (118-124);
imaging the targets (118-124) to obtain locations of the wheel positions;
calculating the length of a front wheel track (150) extending between the locations of the two front wheels (126, 130);
calculating the length of a rear wheel track (152) extending between the locations of the two rear wheels (128, 132);
calculating a front center point (150a) of the front wheel track (150);
calculating a rear center point (152a) of the rear wheel track (152);
defining a line (168) originating from the center point (150a, 152a) of one of the front and rear wheel tracks (150, 152) and perpendicular thereto and intersecting the other of the front and rear wheel tracks (150, 152); and
calculating an offset distance from the intersection of the line (168) with the other of the front and rear wheel tracks (150, 152) to the center point (150a, 152a) of the other of the front and wheel tracks (150, 152).

2. The method according to claim 1. wherein a step of calculating the relationship between the front and rear wheels (126-132) includes comparing the calculated offset distance to a specified range for offset distance.

3. A computer-implemented position determination system for determining alignment between the wheels (126-132) of a vehicle, comprising:
one or more targets (118-124) for indicating wheels positions on the vehicle;
a vision imaging system (102) for imaging the targets (118-124) to obtain locations of the wheel positions, wherein the vision imaging system (102) is configured to calculate the length of a front wheel track (150) and the length of a rear wheel track (152), with the front wheel track (150) being defined between the locations of the two front wheels (126, 130) and the rear wheel track (152) being defined between the locations of the two rear wheels (128, 132), to calculate a front center point (150a) of the front wheel track (150) and a rear center point (152a) of the rear wheel track (152), to define a line (168) originating from the center point (150a) of one of the front and rear wheel tracks (150, 152) and perpendicular thereto and intersecting the other of the front and rear wheel tracks (150, 152), and to calculate an offset distance from the intersection of the line (168) with the other of the front and rear wheel tracks (150, 152) to the center point (150a, 152a) of the other of the front and rear wheel tracks (150, 152).

4. The system according to claim 3, wherein the system is configured to compare the calculated offset distance to a specified range for said offset distance.

## Patentansprüche

1. Verfahren zum Bestimmen von Ausrichtungen zwischen den Rädern (126 130) eines Fahrzeugs unter Verwendung eines Positionsbestimmungssystems (100), das die Schritte umfasst:
Kennzeichnen von Radpositionen am Fahrzeug mit Zielen (118 124);
Abbilden der Ziele (118-124), um Orte der Radpositionen zu erlangen;
Berechnen der Länge einer Vorderradspur (150), die sich zwischen den Orten der zwei Vorderräder (126, 130) erstreckt;
Berechnen der Länge einer Hinterradspur (152), die sich zwischen den Orten der zwei Hinterräder (128, 132) erstreckt;
Berechnen eines vorderen Mittelpunkts (150a) der Vorderradspur (150);
Berechnen eines hinteren Mittelpunkts (152a) der Hinterradspur (152);
Definieren einer Linie (168) ausgehend vom Mittelpunkt (150a, 152a) von einer der Vorder- und Hinterradspuren (150, 152) und senkrecht hierzu und die andere der Vorder- und Hinterradspuren (150, 152) schneidend; und
Berechnen eines Versatzmaßes von dem Schnittpunkt der Linie (168) mit der anderen der Vorder- und Hinterradspuren (150, 152) zu dem Mittelpunkt (150a, 152a) der anderen der Vorder- und Hinterradspuren (150, 152).

2. Verfahren nach Anspruch 1, wobei ein Schritt des Berechnens der Beziehung zwischen den vorderen und hinteren Rädern (126-132) das Vergleichen des berechneten Versatzmaßes mit einem spezifizierten Bereich für das Versatzmaß enthält.

3. Computer-implementiertes Positionsbestimmungssystem zum Bestimmen der Ausrichtung zwischen den Rädern (126-130) eines Fahrzeugs, umfassend:
eines oder mehrere Ziele (118-124) zum Kennzeichnen von Radpositionen am Fahrzeug;
ein optisches Abbildungssystem (102) zum Abbilden der Ziele (118; 124), um Orte der Radpositionen zu erlangen, wobei das optische Abbildungssystem (102) so konfiguriert ist, dass es die Länge einer Vorderradspur (150) und die Länge einer Hinterradspur (152) berechnet, wobei die Vorderradspur (150) zwischen den Orten der zwei Vorderräder (126, 130) definiert ist und die Hinterradspur (152) zwischen den Orten der zwei Hinterräder (128, 132) definiert ist, um einen vorderen Mittelpunkt (150a) der Vorderradspur (150) und einen hinteren Mittelpunkt (152a) der Hinterradspur (152) zu berechnen, um eine Linie (168) ausgehend vom Mittelpunkt (150a, 152a) der einen der Vorder- und Hinterradspuren (150, 152) und senkrecht hierzu und die andere der Vorder- und Hinterradspuren (150, 152) schneidend zu definieren, und um ein Versatzmaß von dem Schnittpunkt der Linie (168) mit der anderen der Vorder- und Hinterradspuren (150, 152) zu dem Mittelpunkt (150a, 152a) der anderen der Vorder- und Hinterradspuren (150, 152) zu berechnen.

4. System nach Anspruch 3, wobei das System so konfiguriert ist, dass es das berechnete Versatzmaß mit einem spezifizierten Bereich für das Versatzmaß vergleicht.

## Revendications

1. Procédé de détermination d'alignements entre les roues (126 à 132) d'un véhicule en utilisant un système de détermination de position, comprenant les stades dans lesquels :
on indique des positions de roue sur le véhicule par des cibles (118 à 124) ;
on forme une image des cibles (118 à 124) pour obtenir des emplacements des positions de roue ;
on calcule la longueur d'une distance (152) de roue avant s'étendant entre les emplacements des deux roues (126, 130) avant ;
on calcule la longueur d'une distance (152) de roue arrière s'étendant entre les emplacements des deux roues (128, 132) arrière ;
on calcule un point (150a) central avant de la distance (150) de roue avant ;
on calcule un point (152a) central arrière de la distance (152) de roue arrière ;
on définit une droite (168) partant du point (150a, 152a) central de l'une des distances (150, 152) de roue avant et arrière et lui étant perpendiculaire et coupant l'autre des distances (150, 152) de roue avant et arrière ; et
on calcule une distance de décalage allant de l'intersection de la droite (168) avec l'autre des distances (150, 152) de roue avant et arrière au point (150a, 152a) central de l'autre des distances (150, 152) de roue avant et arrière.

2. Procédé suivant la revendication 1, dans lequel un stade de calcul de la relation entre les roues (126 à 132) avant et arrière comprend la comparaison de la distance de décalage calculée à une plage spécifiée de la distance de décalage.

3. Système de détermination de position informatisé pour la détermination d'un alignement entre les roues (126 à 132) d'un véhicule comprenant :
un ou plusieurs cibles (118 à 124) pour indiquer des positions de roue sur le véhicule ;
un système (102) de formation d'image pour former des images des cibles (118 à 124) afin d'obtenir des emplacements des positions des roues, dans lequel le système (102) de formation d'image est configuré pour calculer la longueur d'une distance (150) de roue avant et la longueur d'une distance (152) de roue arrière, la distance (150) de roue avant étant définie entre les emplacements des deux roues (126, 130) avant et la distance (152) de roue arrière étant définie entre les emplacements des deux roues (128, 132) arrière pour calculer un point (150a) central avant de la distance (150) de roue avant et un point (152a) central arrière de la distance (152) de roue arrière pour définir une droite (168) partant du point (150a, 152a) central de l'une des distances (150, 152) de roue avant et arrière et lui étant perpendiculaire et coupant l'autre des distances (150, 152) de roue avant et arrière, et pour calculer une distance de décalage allant de l'intersection de la droite (168) avec l'autre des distances (150, 152) de décalage au point (150a, 152a) central de l'autre des distances (150, 152) de roue avant et arrière.

4. Système suivant la revendication 3, dans lequel le système est configuré pour comparer la distance de décalage calculée à une plage spécifiée de la distance de décalage.
